# EUROPEAN PATENT APPLICATION

(11) **EP 4 668 571 A1**
(43) Date of publication of application: **24.12.2025**
(21) Application number: 25183581.5
(22) Date of filing: 18.06.2025
(51) Int. Cl.: H02S 20/10, E04H 6/02, F24S 25/12

(54) **STRUCTURE FOR SUPPORTING SOLAR PANELS AND A VEHICLE PARKING AREA COMPRISING THE SAME**

(30) Priority: 19.06.2024 NL 2037991
(71) Applicant: Van Der Valk Systemen B.V., 2681 LP Monster (NL)
(72) Inventor: Prins, Vincent, 2681 LP Monster (NL)
(74) Representative: Nederlandsch Octrooibureau

(57) **Abstract**

The invention relates to a structure (100) for supporting solar panels (10) above a vehicle parking area, the structure comprising the structure comprising a plurality of vertical frames (180) being mutually parallel and linked together by roof elements (130), wherein each vertical frame comprises at least three elongate elements (150, 160, 170) having a box-section and including a column (150) to be anchored to the ground, a beam (160) connected to roof elements and a brace (170) extending diagonally from the column to the beam, and whereby at least two of the elongate elements comprise a side opening (163, 164, 153) at the box-section that is configured to receive an end section of one of the other two elongate elements such that the three elongate elements fit into one another. The invention further relates to a method for assembly such a structure and to a vehicle parking area comprising such a structure. The invention further relates to a kit for assembling a structure for supporting solar panels.

## Description

### Technical Field

The invention relates to a structure for supporting solar panels above a vehicle parking area, to a method for assembly such a structure and to a vehicle parking area comprising such a structure. The invention further relates to a kit for assembling a structure for supporting solar panels.

### Background Art

Structures for installation of solar panels in parking areas are used for creating renewable energy and may also serve to protect vehicles from the sun. These structures are often formed using steel beams bolted and welded together. However, these conventional structures require substantial production effort and costs, especially when customized for specific spaces. Steel beams are typically heavy, increasing the overall weight of the structure. This makes the installation cumbersome and expensive due to extensive welding and on-site customization.

An example of a structure is disclosed in patent document US11111689B2. This document describes a structure that includes a column and four braces supporting a canopy, with two braces on each opposite side of the column. These braces are attached to the column through welding or casting methods.

It is an object of the invention to provide a different type of structure that addresses one or more of the disadvantages of the state of the art as mentioned above, particularly in applications involving vehicle parking areas.

### Summary of Invention

Therefore, according to a first aspect of the invention, there is provided a structure for supporting solar panels above a vehicle parking area, the structure comprising a plurality of vertical frames linked together by roof elements, wherein each vertical frame comprises at least three elongate elements having a box-section and including a column to be anchored to the ground, a beam connected to roof elements and a brace extending diagonally from the column to the beam, and whereby at least two of the elongate elements comprise a side opening into the box-section that is configured to receive an end section of one of the other two elongate elements such that the three elongate elements at least partially fit into one another.

The frame extends in a single vertical plane and has an orientation in which one of the elongate elements, such as the column, is perpendicular to the ground and, together with the brace, supports the beam connecting to the roof elements that support the solar panels. In this context, the term "box-section" is used to indicate that the elongate elements have a rectangular or square cross-section that is closed e.g. by a longitudinal weld. The side openings allow the end section of one element to fit laterally into another element in an interpenetrating manner to form the vertical frame. Advantageously, rectangular or square cross-sections are easy and economical to manufacture using methods such as roll forming, extrusion, or cold drawing. The flat surfaces of rectangular or squared profiles ensure stable and secure connections, minimizing the risk of rotation or misalignment compared to circular or oval cross-sections.

The interpenetrating manner of forming the vertical frame may guide a user on a more efficient assembly sequence, which simplifies assembly time and reduces installation cost. Furthermore, the box-section and the side openings facilitate various attachment methods without welding, such as bolting, riveting or clamping, which are quicker and more cost-effective. The vertical frame has a triangular configuration that can hold the roof elements to support the solar panels. The skilled person will recognize that three elongate elements is an optimal solution for providing a robust structure but that the vertical frame may nevertheless comprise four or more elongate elements e.g. forming a rectangular or polygonal frame.

The vertical frames may provide sufficient strength to support roof elements over large areas, enabling the installation of many solar panels with a minimal number of columns. This is particularly beneficial for roofs above parking areas used to protect parked vehicles from sunlight. The vertical frames can be strategically placed to avoid obstructing parking spaces and access routes, thereby preserving the functionality of the parking area while maximizing the area available for solar power generation. In particular, a single column per frame may be placed at the rear of a parking space or between two rows of parking spaces and adjacent frames may be spaced by two, three, four or more parking spaces.

In an embodiment, the elongate elements may be cold-rolled galvanized steel, welded longitudinally to form a hollow profile. The hollow profile provides structural strength and low weight. Additionally, the hollow profiles facilitate customization of the elongate elements of the vertical frame, enabling a production line for pre-fabrication and storage, leading to a more efficient and cost-effective manufacturing process. During assembly on site, no further welding may be required. The column may be connected to a foot plate that is pre-installed on location. Preferably, a lower end of the column is provided with perforations whereby it can be screwed to the foot plate e.g. using self-tapping screws.

In an embodiment, the elongate elements may have sequentially increased widths from a first element to a third element such that that the end section of the first element fits into the second element and the end section of the second element fits into the third element. This configuration further facilitates the interpenetrating manner of forming the joints. Most preferably, respective elements have internal and external dimensions that correspond such that the interpenetrating joints are tightly aligned, allowing insertion without significant free play. Alternatively, the ends of the elongate elements may be configured differently to allow their respective connection. For example, the side openings and end sections of the elongate elements may be narrowed and/or widened or provided with elements to assist their alignment or fixation.

According to an embodiment, at least one of the interpenetrating joints comprises a spacer. It will be understood that for three elements of constant cross-section, that mutually insert into each other or nest together, there will be a discontinuity of size between the smallest and the largest members. Either the smallest member must be made thicker or an opening in the largest member must be made smaller if a snug fit is to be achieved. In an embodiment, one of the side openings includes a spacer in the form of an indentation at the region of the side opening, thereby locally reducing a width of the elongate element. This helps form a snug and stable connection, particularly at an intersection of the first and last element which may have a larger width difference. The indentation creates a guide and seating area for the elongate element inserted into the opening. Additionally, the indentation can be easily incorporated during the formation of the hollow profiles through manufacturing methods mentioned before and hereinafter.

In an embodiment, the elongate elements may comprise overlapping regions where each of the elongate elements intersects with one of the other two elongate elements. The overlapping regions provide sufficient surface area for a secure connection between the elongate elements, allowing for various fastening methods such as bolting or riveting, which enables customization based on specific structural requirements and installation conditions or costs. The overlapping regions may extend over a mutual area which is at least equal to 0.8 times the cross-section of the smaller element. For each joint, an inner element may fully interpenetrate an outer element such that an end of the inner element abuts against an inside wall of the outer element. Alternatively, the inner element may only partially interpenetrate the outer element e.g. as far as a centreline. This is particular the case for the column, which may connect to a brace and a beam on each side. If the inner element only partially interpenetrates the outer element, this latter may be provided with abutments to limit the depth of insertion. Preferably, abutments are provided as stamped flaps extending into the hollow interior of the box section.

In a further embodiment, the elongate elements may be secured to each other at the overlapping regions by at least two threaded connections. Threaded connections offer cost-effectiveness compared to welding and can maintain alignment over time. Threaded connections also facilitate easier repairs as compared to welded joints, allowing for straightforward replacement of components, if necessary, without compromising the overall stability of the structure. Various threaded connections may be used, including bolts and/or screws. In a preferred embodiment, the connections may be provided by self-tapping screws that can be inserted from outside, without requiring a nut to be placed or held at an inside of the box section. In particular, at certain positions along the length of the elongate members, it may not be possible to access the inner side of the box section to apply a nut. Self tapping screws also avoid the need for captive nuts, which must be accurately welded in position. Perforations for receiving the screws can be stamped directly and accurately into the box sections, preferably prior to folding the plate material to form the section. The perforations of the outer elongate member may be slightly larger than those of the respective inner elongate member to facilitate tightening.

In one configuration, the beam has the widest section and has an interior width that matches the outside width of the column. The beam may connect over the upper end of the column or the column may insert into an opening of the beam. The brace has the narrowest section and has an external width that corresponds to an interior width of the column.

The wall thicknesses of the box sections will be adapted to the respective dimensions of the structure, nevertheless, the use of box sections and interpenetrating joints facilitates the use of significantly thinner and lighter materials than may be the case for I-beams or the like. In embodiments, the wall thicknesses of the elements may vary between 8 mm and 1 mm, with the column having a wall thickness of greater than the other elements. Preferably, the beams and struts have wall thicknesses of between 2 mm and 4 mm or about 3 mm. The widths of the respective sections may vary between 100 mm and 200 mm, whereby the widest element preferably has an outer dimension of between 150 mm and 200 mm.

In an embodiment, the vertical frame may further comprise a fourth and a fifth elongate element with a box-section, including a second brace and a second beam. The second brace may extend diagonally from the column to the second beam and the second beam may connect to further roof elements;. The column may thus comprise two side openings into the box-section at opposite sides, each configured to receive an end section of one of the braces. One of the fourth and the fifth elongate elements may also comprise a side opening into the box-section. This configuration may form a vertical frame having two parts, with the column in the middle, which enhances the stability and load-bearing capacity of the structure. This allows for a stronger support for heavier loads and the ability to span a larger area for the installation of solar panels. The configuration may be symmetrical, with both beams and braces having the same dimensions and being connected to the column at the same vertical height.

In an embodiment, the roof elements may comprise purlins connected to the beams to form a roof above the parking area. Preferably, the plurality of vertical frames are mutually parallel to each other. The purlins may extend perpendicular to the plane of the adjacent frames and may be connected between adjacent beams or connected over the beams. In embodiments, the purlins may thus extend over more than two frames. Alternatively or additionally, the roof elements may comprise roofing sheets such a corrugated sheets of suitable roofing materials, to render the roof water, rain or sun proof. In some cases, the solar panels may themselves be the roof elements and may be directly connected to the frames. In general however, the solar panels will be supported by and attached to the roof elements, being e.g. either purlins or roofing sheets.

In a further embodiment, the roof comprises two roof portions being inclined at opposite angles with respective to the ground and forming a V-shape. The V-shape is advantageous particularly for the solar panel installation because it maximizes exposure to sunlight throughout the day, thereby increasing energy generation. Additionally, the V-shape facilitates drainage of rainwater and debris towards the centre of the V. Preferably, the columns of the vertical frames are positioned between the two roof portions such that one roof portion is substantially held by one part of the vertical frame comprising the first beam and first brace and the other roof portion is substantially held by the other part of the vertical frame comprising the second beam and the second brace.

In a preferred further embodiment, the structure may further comprise a gutter extending in between the roof portions. Including a gutter between the first and second roof allows for collection and channelling of rainwater away from the solar panels. Preferably, an upper end of the one column is aligned to an end section of the gutter, which directs rainwater towards the hollow profile of the column, effectively preventing water from falling directly from the platform to the ground. Instead, the gutter directs water downward inside the column, acting as a downpipe, enabling controlled drainage and potential water collection.

According to a second aspect of the invention, and in accordance with the advantages and effects as described herein above, there is provided a kit for assembling a structure for supporting solar panels, the kit comprising at least three elongate elements having a box-section, whereby at least two of the elongate elements comprise a side opening into the box-section that is configured to receive an end section of one of the other two elongate elements such that the three elongate elements fit into one another to form a frame. The side openings of the two elements predefine a relative position of the elongate elements with respect to each other. This ensures precise positioning of the elongate elements, simplifying the assembly process and improving the overall structural stability by ensuring consistent and accurate connections.

In an embodiment, the box-section of each of the elongate elements may comprise a sidewall having overlapping regions, particularly each overlapping region may comprise at least two perforations, wherein the respective perforations of interpenetrating elements are configured to be aligned and secured together during assembly of the structure. The perforations in overlapping regions predefine a more precise relative position and angle of the elongate elements with respect to each other. This ensures precise positioning of the elongate elements, simplifying the assembly process and improving the overall structural stability by ensuring consistent and accurate connections. Additional abutment surfaces may be provided to define the depth of penetration of one elongate element into the opening of another element. This can assist in ensuring alignment of the perforations prior to insertion of fasteners such as screws nuts or rivets.

According to another aspect of the invention, and in accordance with the advantages and effects as described herein above, there is provided a vehicle parking area comprising a structure according to the first aspect of the invention, wherein solar panels are supported by roof elements of the structure.

There is also defined a method of manufacturing such a structure, comprising delivering cold-rolled steel sheet, stamping the sheet to form openings and perforations and folding and welding the sheet longitudinally to form box sections having three nesting dimensions. In a preferred embodiment, the largest of the three box sections also includes a locally indented portion, where its internal section is reduced to the outside dimension of the smallest of the three box sections.

According to another aspect of the invention, and in accordance with the advantages and effects as described herein above, there is provided a method for assembling a structure such as defined above or hereinafter, wherein the structure comprises a plurality of vertical frames each comprising at least three elongate elements having a box-section, whereby at least a first element and a second element comprise a side opening, the method comprising: fitting an end section of a third element into the side opening of the first element; and fitting an end section of the first element into the side opening of the second element.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g., "20") to generally refer to an unspecified instance or to all instances of that element, while the reference number will include an appended letter (e.g., "20a") to refer to a specific instance of the element.
Figure 1 schematically shows an isometric view of a structure for an installation of solar panels above a vehicle parking area according to the invention.
Figure 2A schematically shows a partial isometric view of the structure of Figure 1 and without roofing sheets and solar panels.
Figure 2B schematically shows an enlarged view of the structure of Fig. 2A showing the elements of the vertical frame 180.
Figures 3A, 3B, and 3C illustrate respectively a frontal, side and top view of a column element.
Figures 4A, 4B, and 4C illustrate respectively a cross-section, frontal, and bottom view of a beam.
Figures 5A and 5B illustrate respectively a cross-section and frontal view of a brace.
Figures 6A and 6B illustrate respectively a frontal and side view of a roof element.

The figures are meant for illustrative purposes only, and do not serve as restriction of the scope or the protection as laid down by the claims.

### Description of Embodiments

The following is a description of certain embodiments of the invention, given by way of example only and with reference to the figures.

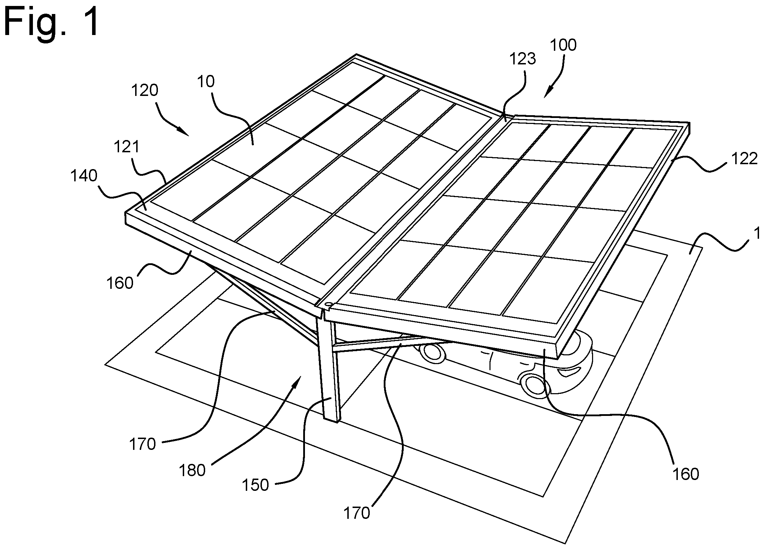

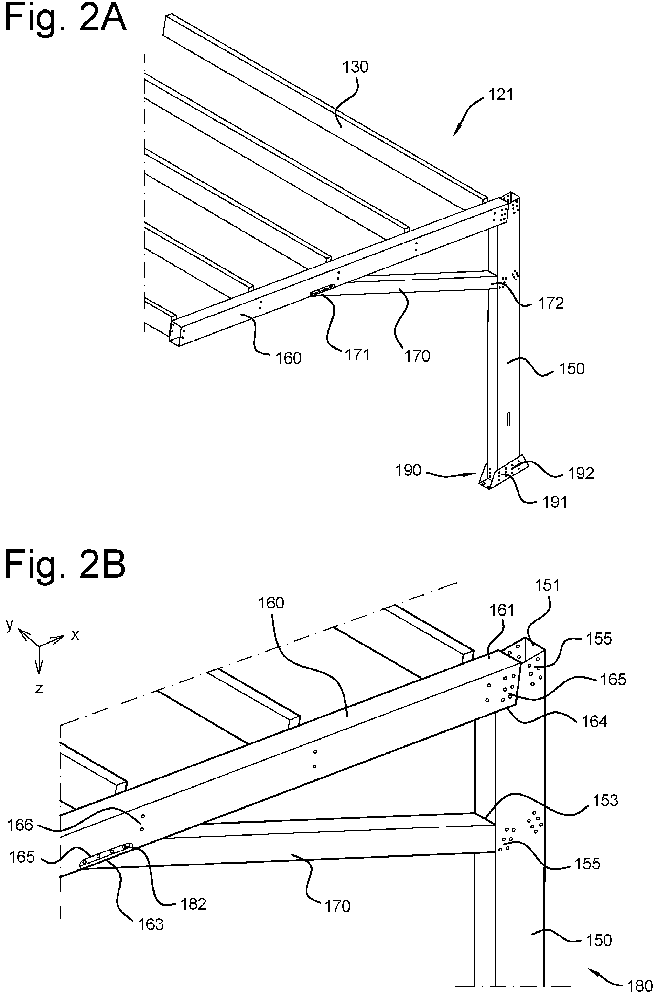

Figure 1 schematically shows an isometric view of a structure 100 for an installation of solar panels above a vehicle parking area 1. The structure 100 comprises two vertical frames 180, each comprising beams 160 connected to roof elements 130 (see also Fig 2A). The beams 160 and the roof elements 130 form a roof 120 that includes two separate roof portions 121, 122. The roof portions 121, 122 are supported through the beams 160 by the vertical frames 180. In this illustrated embodiment, each vertical frame 180 comprises five elongate box-section elements. In the depicted embodiment, each vertical frame 180 comprises a column 150 extending in a vertical direction Z and two braces 170 extending diagonally from the column 150 to support the beams 160 at opposite sides of the column 150. The roof 120 is configured to receive roofing sheets 140, in the depicted example, corrugated sheets. The roofing sheets 140 are configured to support solar panels 10. In the illustrated embodiment, the structure 100 has only two frames 180 and spans two rows of four parking spaces. It will be understood that additional frames 180 can be added to extend the structure 100 to any desired length.

The roof portions 121, 122 have an inclination with respect to the horizontal to form a V-shape. For example, each roof portion 121, 122, may be at an angle with respect to the horizontal of approximately -10.0 degrees to +10.0 degrees, preferably -5.0 degrees to +5.0 degrees. The roof 120 further comprises a gutter 123 at the lowest area of the roof 120 and extending between the roof portions 121, 122, to catch rainwater and carry it off towards the column(s) 150.

Figure 2A schematically shows a partial isometric view of the structure 100 of Figure 1 and with roofing sheets 140 and solar panels 10 removed. The first roof portion 121 comprises a plurality of purlins 130, parallel and spaced with respect to one another and each connected to a beam 160. A first end section 171 of the brace 170 intersects a central region of the beam 160 while a second end section 172 of the brace 170 intersects an upper half of the column 150.

The column 150 is anchored to the ground by a foundation system 190 comprising a foot plate 191. Both the column 150 and the footplate 191 comprise perforations 192 to secure them together by the use of self-tapping screws, avoiding the requirement of providing a thread within the column. The foot plate 191 may be further secured to a concrete foundation using bolts, providing a stable and robust base at low cost. Alternatively the foundation system 190 includes embedding the column 150 directly into a concrete foundation, for example a sleeve foundation, and securing it with rebar for added strength, or using ground screws that can be driven into the soil.

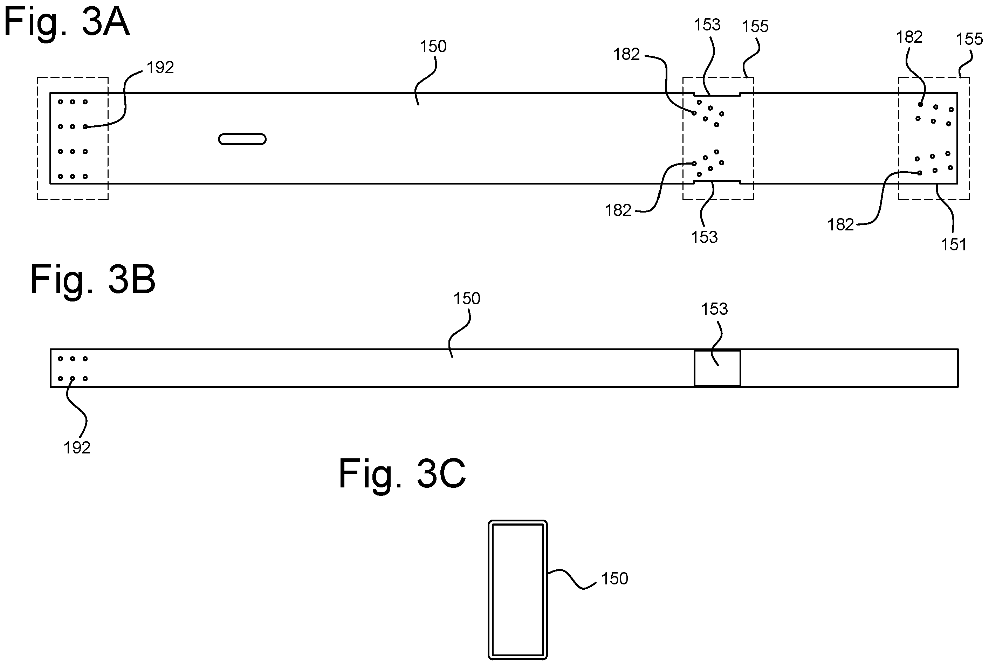

Figure 2B schematically shows an enlarged view of the structure 100 of Fig. 2A showing the elements of the vertical frame 180.The column 150, the brace 170, and the beam 160 have a box-section section with a hollow profile. The beam 160 and the column 150 include a side opening 163, 153 to respectively receive the first and second end sections 171, 172 of the brace 170. Additionally, the beam 160 includes an end side opening 164 (see also Fig. 3) comprising a cutout on a sidewall of the first end section 161. The end side opening 164 is configured to receive an upper section 151 of the column 150. A width of the elongate elements 150, 170, 160 of the vertical frame 180 is configured such that the side openings 163, 164, 153 allow the elongate elements to fit into one another in a nested sequence. In the depicted example, the beam 160 has the largest width, followed by the column 150 and then the brace 170.

The sidewalls of the column 150, the brace 170, and the beam 160 intersect at overlapping regions. For example, at the intersection of the column 150 and the brace 170, in which the brace 170 fits into the column 150, the outer sidewalls of the second end section 172 of the brace 170 overlap with the inner sidewalls of the column 150. The overlapping regions 155, 175, 165 of the sidewall in each of the column 150, the brace 170a, and the beam 160 comprise at least two perforations 182 (see also Figs. 3-5). The perforations 182 in each overlapping region 155, 175, 165 are configured to be aligned and connected together by self-tapping screws during assembly of the vertical frame 180. The perforations 182 and the side openings 163, 164, 153 are all prefabricated. In that way, the position and angle between the column 150, the brace 170, and the beam 160 can be predefined, which facilitates the assembly of the vertical frame 180 on site.

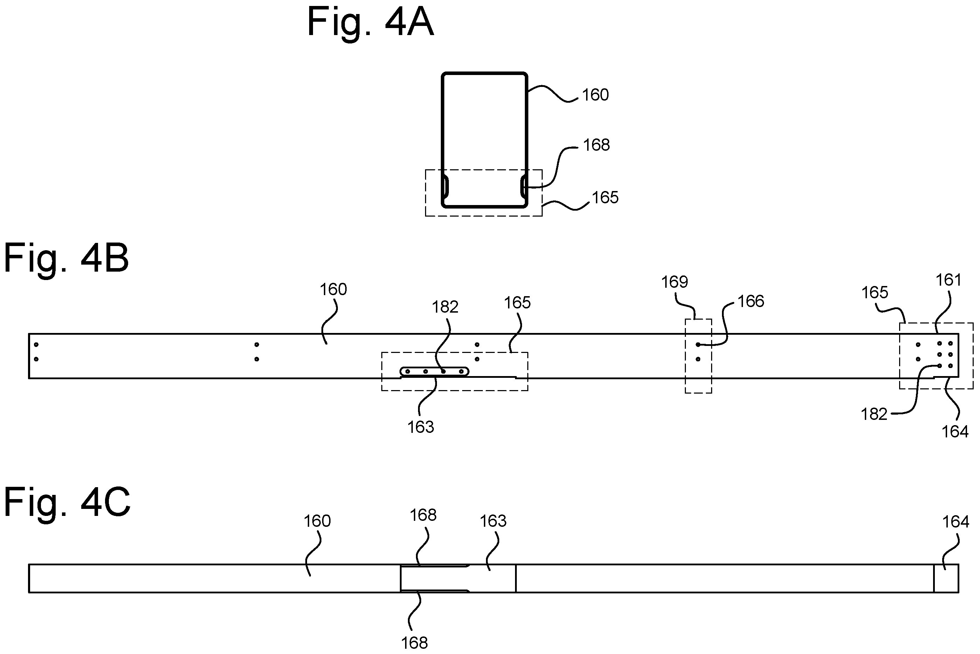

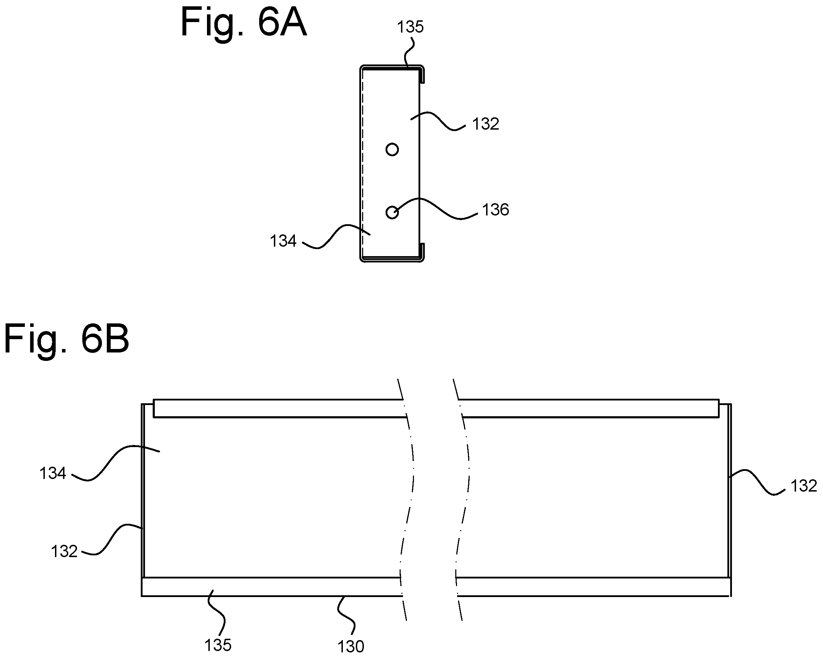

The beams 160 and the roof elements 130 also comprise perforations 166, 136 for connection with each other (see Figs. 4 and 6). Specifically, in the depicted embodiment, the beam 160 comprises pairs of perforations 166 over its length for alignment with perforations 136 on an end 131 of the roof elements 130. Thus, the roof elements 130 connect to the beams 160 through additional overlapping regions 169. To facilitate connection of the beams 160 to the roof elements 130, the roof elements 130 comprise an open profile with a C-shaped cross-section and closed ends where the perforations 136 are present (see also Fig. 6A).

Although not shown in Figures 2A-2B, the column 150 is arranged to connect with two beams 160 and two braces 170 as described above with reference to Fig. 1 and as described below with reference to Figs. 3A-3C.

Figures 3A, 3B, and 3C illustrate respectively a frontal, side and top view of the column element 150. Figures 3A and 3B show side openings 153 configured to receive the second end section 172 of the braces 170a, 170b. Figure 3A shows the perforations 182 at overlapping regions 155 for connections with the beams 160a, 160b and the braces 170a, 170b.

Figures 4A, 4B, and 4C illustrate respectively a cross-section, frontal, and bottom view of the beams 160. Figures 4B and 4C show side openings 163, 164 configured to receive respectively the first end section 171 of the brace 170 and the upper section 151 of the column 151. Figure 4B shows the perforations 182 at overlapping regions 165 for connection with the column 150 and the brace 170. Figure 4A specifically shows a cross-section view of the longitudinal beam 160 at the level of the overlapping region 165 for intersection with the brace 170. An inner side of the sidewall comprises indentations 168, which reduce the internal width of the longitudinal beam 160 at the overlapping region 165 to approximately the width of the brace 170, this provide a more stable connection.

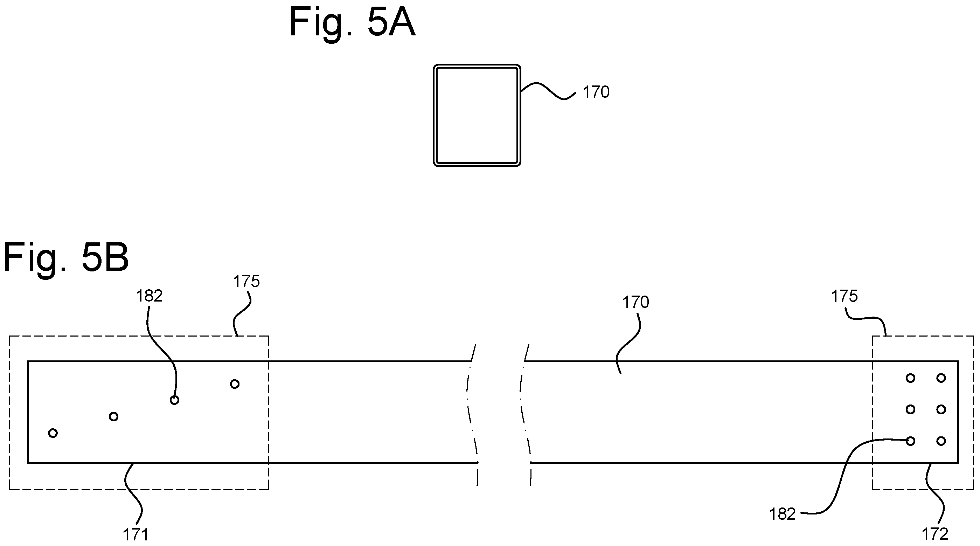

Figures 5A and 5B illustrate respectively a cross-section and frontal view of the brace 170. Figure 5B, shows first and second end sections 171, 172 of the brace 170 as well as overlapping regions 175 and perforations 182, for connection with the longitudinal beam 160a, 160b and the column 150.

Figures 6A and 6B illustrate respectively a frontal and side view of a roof element 130. The roof elements 130 comprise an open profile with a C-shaped cross-section and closed ends 132. Both ends 132 comprise perforations 136 for connection to longitudinal beams 160 on both sides of the roof elements 130. To form the roof elements 130, cold-rolled galvanised sheet 134 is folded into a C-shaped profile 135 and then ends of the sheet 134 are bend towards the opening of the C shape to close the ends 132.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

## Claims

1. A structure (100) for supporting solar panels (10) above a vehicle parking area, the structure (100) comprising a plurality of vertical frames (180) being linked together by roof elements (130), wherein each vertical frame (180) comprises at least three elongate elements (150, 170, 160) having a box-section and including a column (150) to be anchored to the ground, a beam (160) connected to roof elements (130) and a brace (170) extending diagonally from the column (150) to the beam (160), and whereby at least two of the elongate elements comprise a side opening (163, 164, 153) into the box-section that is configured to receive an end section of one of the other two elongate elements such that the three elongate elements (150, 170, 160) fit into one another.

2. The structure (100) of claim 1, wherein the elongate elements (150, 170, 160) are longitudinally welded hollow profiles.

3. The structure (100) of claim 1 or claim 2, wherein the elongate elements (150, 170, 160) have sequentially increased widths from a first element to a third element such that that the end section of the first element fits into the second element and the end section of the second element fits into the third element.

4. The structure (100) of any preceding claim, wherein at least one of the two elongate elements comprising a side opening (163, 164, 153) includes an indentation (168) at the region of the side opening, thereby partially reducing an internal width of the elongate element.

5. The structure (100) of any preceding claim, wherein the elongate elements (150, 170, 160) comprise overlapping regions where each of the elongate elements (150, 170, 160) intersects with the other two elongate elements.

6. The structure of claim 5, wherein the elongate elements (150, 170, 160) are secured to each other at the overlapping regions by at least two threaded connections.

7. The structure (100) of any preceding claim, wherein the vertical frame (180) further comprises a fourth and a fifth elongate element (160, 170) with a box-section and including a second brace (170) and a second beam (160), the second brace (170) extending diagonally from the column (150) to the second beam (160); and wherein the column (150) comprises two opposed side openings into the box-section, configured to receive respective end sections of the braces (170) and wherein one of the second brace (170) or second beam (160) comprises a side opening into the box-section.

8. The structure (100) of any preceding claim, wherein the roof elements (130) comprise purlins connected to the beams (160) to form a roof above the parking area.

9. The structure (100) of claim 8, wherein the roof comprises two roof portions (121, 122) being inclined at opposite angles with respective to the ground and forming a V-shape.

10. The structure (100) of claim 9, further comprising a gutter (123) extending in between the roof portions (121, 122) for collection and channelling of rainwater away from the solar panels (10).

11. The structure (100) of claim 10, wherein an upper end of the one column (150) is aligned to an end section of the gutter (123) for receiving rain water.

12. A kit for assembling a structure (100) for supporting solar panels (10), the kit comprising:
at least three elongate elements (150, 170, 160) having a box-section, whereby at least two of the elongate elements comprise a side opening (163, 164, 153) into the box-section that is configured to receive an end section of one of the other two elongate elements such that the three elongate elements (150, 170, 160) fit into one another.

13. The kit of claim 12, wherein the box-section of each of the elongate elements (150, 170, 160) comprises a sidewall having overlapping regions, particularly each overlapping region comprises at least two perforations (182, 166, 136), wherein the perforations (182, 166, 136) of two elongate elements are configured to be aligned and secured together, preferably using self-tapping screws, during assembly of the structure (100).

14. A vehicle parking area comprising a structure (100) according to any of the claims 1-11, wherein solar panels (10) are supported by roof elements (130) of the structure (100).

15. A method for assembling a structure (100) according to any of the claims 1-11, wherein the structure (100) comprises a plurality of vertical frames (180) each comprising at least three elongate elements (150, 170, 160) having a box-section, whereby at least a first element and a second element comprise a side opening (163, 164, 153), the method comprising:
fitting an end section of a third element into the side opening of the first element; and
fitting an end section of the first element into the side opening of the second element.

16. The method of claim 15, wherein the elongate elements (150, 170, 160) are provided with stamped perforations (182, 166, 136) and the structure (100) is assembled without welding by insertion of self-tapping screws into the perforations (182, 166, 136) to secure the elongate elements (150, 170, 160) together.
